# EUROPEAN PATENT APPLICATION

(11) **EP 4 843 707 A1**
(43) Date of publication of application: **25.11.2026**
(21) Application number: 24918348.4
(22) Date of filing: 26.12.2024
(51) Int. Cl.: B25B 13/46

(54) **RATCHET WRENCH**

(30) Priority: 17.01.2024 CN 202410072148
(71) Applicant: Hangzhou Great Star Industrial Co., Ltd., Zhejiang 310019 (CN)
(72) Inventor: WANG, Wei, Hangzhou, Zhejiang 310019 (CN); JIANG, Hao, Hangzhou, Zhejiang 310019 (CN)
(74) Representative: Bergenstråhle & Partners AB
(86) International application number: PCT/CN2024/142559
(87) International publication number: WO 2025/152740

(57) **Abstract**

A ratchet wrench, comprising: a handle; a working part, the working part comprising a circumferential wall and a transition portion, the circumferential wall defining an accommodation space therein in the shape of an opening, the transition portion coupling the handle to the circumferential wall, the transition portion defining an accommodation cavity therein, the accommodation cavity in communication with the accommodation space; a drive member, the drive member disposed within the accommodation space and configured to be rotatable about a center axis of the accommodation space, the drive member defining first teeth on its outer circumferential surface; a pawl, the pawl disposed within the accommodation cavity, the pawl having a first surface and a second surface, which oppose each other, the first surface provided thereon with second teeth, the second teeth configured to be able to be brought into meshing engagement with the first teeth, the second surface oriented to face a side wall of the accommodation cavity; and a first resilient element, the first resilient element disposed within the accommodation cavity and configured to be able to apply a biasing force to the pawl to push the pawl toward an end of the accommodation cavity to disengage the second teeth from meshing engagement with the first teeth.

## Description

### Field of the Invention

This application relates to the field of hand tools and, in particular, to a ratchet wrench.

### Description of the Prior Art

Existing ratcheting tools include drive member and a pawl, which are arranged in meshing engagement on a main body. The pawl is often assembled to the main body with a shaft. The main body can be driven by the pawl to rotate, causing the drive member to rotate in synchronization to apply a torque to a workpiece. The shaft transmits support from the main body to the pawl. Due to a limited diameter of the shaft, the ratcheting tools are limited in maximum output torque. In order to ensure movability of the pawl, as well as rotatability of the shaft relative to the pawl or main body, an adequate marginal clearance must be left to allow the pawl to move as desired, which, however, may lead to an idle stroke of the ratcheting tools during switching to rotation in the other direction. For the sake of assembly, an end of the shaft is usually exposed on the surface of the main body, and inadvertent touches thereof may lead to loosening.

Another ratcheting tool has been proposed, in which the pawl is received in an accommodation cavity and acts to drive rotation of the main body, which in turn causes the drive member to rotate in synchronization to apply a torque to a workpiece. In this design, the main body provides support to the pawl by means of a support wall of the accommodation cavity. However, as the accommodation cavity extends from the accommodation space, which is in the shape of a circular opening, into a circumferential wall of the main body, the support is relatively thin. Consequently, in operation of the ratcheting tool, in particular under a large torque load, the circumferential wall is easily deformed. The accommodation space has a varying inner diameter, and breakage easily occurs at weak portions of the support wall, leading to a limited maximum torque that the ratcheting tool can withstand.

Conventionally, the accommodation space is formed at a first processing station, and the crescent-shaped accommodation cavity is then separately formed at a different processing station (e.g., a milling station). This requires making adjustments in angle at which tooling is fixed and determining directions and angles α at which tools are fed. This approach involves many steps and lacks accuracy and efficiency.

### Summary of the Invention

The problem sought to be solved by the present application is, and it is an object of this application, to overcome the disadvantage of an insufficient maximum output torque associated with conventional ratcheting tools by presenting a ratchet wrench having a head portion configuration, which enables the ratchet wrench to provide an increased maximum torque.

To this end, this application provides a ratchet wrench comprising a handle; a working part, the working part comprising a circumferential wall and a transition portion, the circumferential wall defining an accommodation space therein in the shape of an opening, the transition portion coupling the handle to the circumferential wall, the transition portion defining an accommodation cavity therein, the accommodation cavity in communication with the accommodation space; a drive member, the drive member disposed within the accommodation space and configured to be rotatable about a center axis of the accommodation space, the drive member defining first teeth on its outer circumferential surface; a pawl, the pawl disposed within the accommodation cavity, the pawl having a first surface and a second surface, which oppose each other, the first surface provided thereon with second teeth, the second teeth configured to be able to be brought into meshing engagement with the first teeth, the second surface oriented to face a side wall of the accommodation cavity; and a first resilient element, the first resilient element disposed within the accommodation cavity and configured to be able to apply a biasing force to the pawl to push the pawl toward an end of the accommodation cavity to disengage the second teeth from meshing engagement with the first teeth.

Additionally, the accommodation cavity may comprise a first end and a second end, the first end of the accommodation cavity proximal to a centerline of the handle, the second end of the accommodation cavity distal from the centerline of the handle, wherein a side wall of the accommodation cavity at the first end serves as a first support wall, and a side wall of the accommodation cavity at the second end serves as a second support wall.

A thickness of the first support wall may be not smaller than a thickness of the circumferential wall.

Additionally, an angle between a radial line of the accommodation cavity and the centerline of the handle may lie between 5° and 20°.

Additionally, the drive member may define a working socket therein.

Additionally, a ratio of a thickness of the first support wall to a diameter of an inscribed circle of the drive member may lie between 0.2 and 1.

Additionally, a ratio of an angle between a radial line of the accommodation cavity and the centerline of the handle to a diameter of an inscribed circle of the drive member may lie between 0.5°/mm and 2.5°/mm.

Additionally, a center of curvature of the side wall of the accommodation cavity may be located on one side of the centerline of the handle.

Additionally, a thickness of the second support wall may be smaller than a thickness of the first support wall.

Additionally, the ratchet wrench may further comprise a support member, the support member disposed at the second end of the accommodation cavity, wherein the first resilient element is disposed between the support member and the pawl.

Additionally, the pawl may be a first wedge block matching the first end of the accommodation cavity in shape and contour.

Additionally, the support member may be a second wedge block matching the second end of the accommodation cavity in shape and contour.

Additionally, the support member may be a rod fixed at the second end of the accommodation cavity.

Additionally, there may be m pawls, where m is 2 or 3, which are juxtaposed in an axial direction of the accommodation space, wherein when the second teeth of any one of the pawls are in meshing engagement with the first teeth, the second teeth of another one of the pawls are maintained in meshing engagement with the first teeth at an opposite angle of β/m, where β denotes a central angle corresponding to each single first tooth.

Additionally, the transition portion may be pivotally coupled to the handle by a rotary shaft.

Additionally, a ratio of a thickness of the circumferential wall to a height of the circumferential wall may lie between 0.5 and 0.85.

Additionally, a thickness of the transition portion along its contour on the side of the first support wall may be greater than its thickness along the contour on the other side.

Additionally, a height of the circumferential wall may gradually increase from a location distal from the transition portion to a location proximal to the transition portion.

Additionally, the working socket of the drive member may be square.

Additionally, the ratchet wrench may further comprise a coupling head slidably, which is coupled in the working socket of the drive member and configured to be switchable between a first position, where its one end is exposed from the working socket on one side thereof, and a second position, where its other end is exposed from the working socket on the opposite side thereof.

To the above end, this application provides another ratchet wrench comprising a handle, at least one end of which is configured as a ratcheting end characterized in comprising:
a main body defining an accommodation space in the shape of a circular opening and an accommodation cavity, wherein the accommodation space is defined by a circumferential wall;
a drive member, which is rotatably received in the accommodation space and defines first teeth on its outer circumferential surface;
a pawl, which is disposed in the accommodation cavity and defines second teeth; and
a first resilient element for applying a biasing force to the pawl,
wherein the main body has a transition portion joined to the handle; the accommodation cavity is defined in the transition portion so as to be in communication with the accommodation space; the accommodation cavity has a support wall; under the action of the biasing force from the first resilient element, the pawl tends to move toward a location between the second teeth and the support wall; a ratio of a thickness of the support wall to a diameter of an inscribed circle of the drive member ranges from 0.2 to 1; and when the main body drives the drive member to rotate in synchronization therewith by means of the pawl, the support wall enables the main body to provide a supporting force to the pawl.

In this ratchet wrench, the support wall is provided by the transition portion of the main body that is joined to the handle, instead of by the circumferential wall. Moreover, the ratio of the thickness of the support wall to the diameter of the inscribed circle of the drive member is configured within the range of 0.2 to 1. In this way, the thickness of the support wall is large enough to avoid any weak portion of the circumferential wall and enable the ratchet wrench to provide an increased maximum torque. Further, the thickness of the support wall varies with the diameter of the inscribed circle of the drive member, enabling the resulting ratchet wrenches of various gauges to satisfy corresponding maximum torque requirements.

A method for determining the thickness of the support wall may involve: determining the number of second teeth in meshing engagement the first teeth as an integer in the range of 3 to 12; and determining the thickness of the support wall as an average thickness of its portions corresponding to the respective second teeth.

In one embodiment, the thickness of the support wall may not be smaller than a thickness of the circumferential wall. This can ensure that strength of the support wall is large enough to enable the ratchet wrench to withstand an intended torque.

In particular, a radial line of the accommodation cavity may be offset to one side of a centerline of the handle. The radial line of the accommodation cavity corresponds to a straight line passing through a center of curvature of a side wall of the accommodation cavity and a center of curvature of the circumferential wall. Here, the centerline of the handle refers to its geometric centerline. There is an angle between the radial line of the accommodation cavity and the centerline of the handle. In this way, the support wall can be thickened to enable the ratchet wrench to provide a larger maximum torque, without expanding the contour or size of the main body. According to test results, when the angle between the radial line of the accommodation cavity and the centerline of the handle lies between 5° and 20°, the support wall can be appropriately located so that its thickness is suitable to enable the ratchet wrench to provide an increased maximum torque.

According to test results, when the angle is at a ratio of 0.5°/mm to 2.5°/mm to the diameter of the inscribed circle of the drive member, the support wall can be appropriately located in the main body so that its thickness is suitable to enable the ratchet wrench to provide an increased maximum torque while not compromising the strength of the rest of the main body.

Preferably, the accommodation cavity is crescent-shaped, with its side wall having the center of curvature located on one side of the centerline n of the handle. A first end of the accommodation cavity is proximal to the centerline of the handle, while its second end is distal from the centerline of the handle. The pawl is received in the accommodation cavity at the first end, and its side wall at the first end provides the support wall. The side wall of the accommodation cavity at the second end thereof serves as a support wall for the first resilient element. In this way, sufficient room is made to accommodate the support wall in the transition portion while ensuring a desirable thickness of the support wall. In particular, the thickness of the support wall may be less than that of the circumferential wall to ensure that stress is desirably distributed throughout the extent of the transition portion, making it able to withstand a larger torque.

A support member may be disposed in the accommodation cavity at the second end thereof to support the first resilient element, thereby allowing it to apply a biasing force to the pawl. The first resilient element may be supported on both the support member and the support wall, without being subject to any torque for turning a workpiece. With this arrangement, through offsetting the accommodation cavity from the centerline of the handle, the thickness of the support wall for the spring can be reduced and that of the other support wall can be increased to enable the ratchet wrench to provide an increased maximum torque.

Preferably, the pawl is provided in the form of a first wedge block matching the first end of the accommodation cavity in shape and contour. This ensures that the pawl can transfer a torque from the support wall to the drive member and withstand a relatively large supporting force without experiencing any irreversible deformation caused thereby.

In one embodiment, the support member is provided in the form of a second wedge block matching the second end of the accommodation cavity in shape and contour. In this way, the support member can be maintained relatively stable in position, ensuring that the first resilient element can apply a biasing force to the pawl. Further, the support member may be movable and adjustable in orientation and position within the accommodation cavity at the second end.

In one embodiment, the support member is a rod fixed in the accommodation cavity at the second end.

In one embodiment, there are m pawls, where m is 2 or 3, which are juxtaposed in an axial direction of the accommodation space, wherein when the second teeth of any one of the pawls are in meshing engagement with the first teeth, the second teeth of another one of the pawls are maintained in meshing engagement with the first teeth at an opposite angle of β/m, where β denotes a central angle corresponding to each single first tooth. With this arrangement, in the process of turning a workpiece, the second teeth can be brought into meshing engagement with the first teeth simply by rotating the handle by an angle equal to β/m in the opposite direction. In a limited space, it may not be possible for the handle to be rotated by the central angle corresponding to each first tooth. This embodiment is particularly suitable for use for turning a workpiece in such applications, because the handle is allowed to be rotated by a smaller angle in the opposite direction to bring the second teeth into meshing engagement with the first teeth. The handle can be rotated to turn the workpiece in repeated cycles.

In one embodiment, the transition portion is integrally formed with the handle.

In one embodiment, the transition portion is coupled to the handle by a rotary shaft. This allows the ratcheting end to be adjusted in orientation relative to the handle, facilitating turning of a workpiece at a desired orientation.

Preferably, a ratio of the thickness of the circumferential wall to a height of the circumferential wall lies between 0.5 and 0.85. This can ensure not only coupling of the driving portion with a workpiece or adapter but also strength of the main body and the various force-transmitting components thereof.

In order to prevent dislodgement of the pawl from the working position, the accommodation cavity may be hidden in the main body.

In one embodiment, a thickness of the transition portion along its contour on the side of the support wall is greater than its thickness along the contour on the other side. This can additionally increase the strength of the support wall.

In one embodiment, a height of the circumferential wall gradually increases from a location distal from the transition portion to a location proximal to the transition portion. This can further increase the strength of the support wall.

To the above end, this application provides yet another ratchet wrench comprising a handle, at least one end of which is configured as a ratcheting end characterized in comprising:
a main body defining an accommodation space in the shape of a circular opening and an accommodation cavity, wherein the accommodation space is defined by a circumferential wall, and the accommodation cavity is in communication with, and offset from, the accommodation space;
a drive member, which is rotatably received in the accommodation space and defines first teeth on its outer circumferential surface;
a pawl, which is disposed in the accommodation cavity and defines second teeth; and
a first resilient element for applying a biasing force to the pawl,
wherein a radial line of the accommodation cavity is offset to one side of a centerline of the handle. The radial line of the accommodation cavity corresponds to a straight line passing through a center of curvature of a side wall of the accommodation cavity and a center of curvature of the circumferential wall. The centerline of the handle is defined as its geometric centerline. An angle is maintained between the radial line of the accommodation cavity and the centerline of the handle. Offsetting the accommodation cavity enables an increased support wall thickness while not expanding the size or contour of the main body.

For ease of machining, the accommodation cavity is crescent-shaped. In this way, the machining can be accomplished simply by milling.

The center of curvature of the side wall of the accommodation cavity is located on one side of the centerline of the handle. A first end of the accommodation cavity is proximal to the centerline of the handle, while its second end is distal from the centerline of the handle. The pawl is received in the accommodation cavity at the first end, and its side wall at the first end provides the support wall. The side wall of the accommodation cavity at the second end thereof serves as a support wall for the first resilient element. In this way, sufficient room is made to accommodate the support wall in the transition portion while ensuring a desirable thickness of the support wall.

The thickness of the support wall may be less than that of the circumferential wall, thereby ensuring the support wall is strong enough to withstand an intended large torque.

According to test results, when the angle lies between 5° and 20°, the support wall can be appropriately located so that its thickness is suitable to enable the ratchet wrench to provide an increased maximum torque.

According to test results, when the angle is at a ratio of 0.5°/mm to 2.5°/mm to a diameter of an inscribed circle of the drive member, the support wall can be appropriately located in the main body so that its thickness is suitable to enable the ratchet wrench to provide an increased maximum torque while not compromising the strength of the rest of the main body.

To the above end, this application provides a method of making a ratchet wrench, which comprising fining machining an accommodation space in the shape of a circular opening and an accommodation cavity in a main body of a ratcheting end. It is characterized in that the accommodation space and the accommodation cavity are integrally formed by the fine machining, which is accomplished by CNC turning and milling at a single processing station, and in that precise angle formation is accomplished by program-controlled movement of a spindle at desired angles. According to this application, the main body of the ratcheting end comprises a transition portion coupled to a handle, and the accommodation cavity is in communication with the accommodation space and extends therefrom into the transition portion. The accommodation cavity provides a support wall, and a first resilient element biases a pawl to bring its second teeth into meshing engagement with first teeth and presses its backside against the support wall. A ratio of a thickness of the support wall to a diameter of an inscribed circle of a drive member is configured within the range of 0.2 to 1. Through providing the support wall in the transition portion of the main body that is coupled to the handle, instead of in a circumferential wall, the ratchet wrench ensures that the support wall has a sufficient thickness and avoids the circumferential wall from having any weak portion. Therefore, it can provide an increased maximum torque. In addition, the thickness of the support wall varies with the diameter of the inscribed circle of the drive member, enabling the resulting ratchet wrenches of various gauges to satisfy corresponding maximum torque requirements.

Additionally, according to the present application, a radial line of the accommodation cavity is offset to one side of a centerline of the handle. The radial line of the accommodation cavity corresponds to a line passing through the geometric center of the accommodation cavity and an axis of the accommodation space at right angles. The centerline of the handle is defined as its geometric centerline. Thus, an angle is maintained between the radial line of the accommodation cavity and the centerline of the handle. This allows the support wall to have an increased thickness, which enables the ratchet wrench to provide a greater maximum torque, without expanding the size or contour of the main body.

According to the present application, the accommodation space and the accommodation cavity are integrally formed by fine machining accomplished by CNC turning and milling at a single processing station, in which precise angle formation is achieved through controlling a spindle using a program so that it can be stopped exactly at desired angles.

### Brief Description of the Drawings

Fig. 1 schematically illustrates an orthographic projection of a ratchet wrench according to the present application from one perspective angle.
Fig. 2 is a right view of Fig. 1.
Fig. 3 is a cross-sectional view taken along A-A of Fig. 1.
Fig. 4 is a cross-sectional view taken along B-B of Fig. 2.
Fig. 5 is a schematic diagram showing a handle and a main body, which are also shown in Fig. 4.
Fig. 6 is a schematic exploded view of a ratcheting end according to the present application.
Fig. 7 is a partial cross-sectional view of a ratchet wrench according to the present application from one perspective angle.
Fig. 8 is a cross-sectional view taken along C1-C1 of Fig. 7.
Fig. 9 is a cross-sectional view taken along D1-D1 of Fig. 7.
Fig. 10 schematically illustrates an orthographic projection of a ratchet wrench constructed according to the present application from one perspective angle.
Fig. 11 is a cross-sectional view taken along E-E of Fig. 10.
Fig. 12 is an enlarged cross-sectional view taken along F1-F1 of Fig. 11.
Fig. 13 is an enlarged cross-sectional view taken along G-G of Fig. 11.
Fig. 14 is a schematic exploded view of a ratcheting end according to this application.
Fig. 15 is a schematic diagram of a ratcheting end according to this application.
Fig. 16 is a schematic diagram of a ratcheting end according to this application.
Fig. 17 schematically illustrates an orthographic projection of a ratchet wrench constructed according to the present application from one perspective angle.
Fig. 18 is a right view of Fig. 17.
Fig. 19 is a cross-sectional view taken along H1-H1 of Fig. 17.
Fig. 20 is a cross-sectional view taken along I-I of Fig. 18.
Fig. 21 is a cross-sectional view taken along J-J of Fig. 18.
Fig. 22 is a schematic exploded view of a ratcheting end according to this application.
Fig. 23 schematically illustrates one-way analysis of variance (ANOVA) results of a torque vs. eccentricity relationship of eccentric ratchets with a diameter D of an inscribed circle C of a drive member being 10 mm.
Fig. 24 schematically illustrates ANOVA results of a torque vs. eccentricity relationship of eccentric ratchets with a diameter D of an inscribed circle C of a drive member being 16 mm.
Fig. 25 shows box plots of mean lifespans measured in ASME full-life tests, showing a service life comparison.
Fig. 26 shows curves of the mean lifespans measured in the ASME full-life tests, also showing a service life comparison.

List of Reference Numerals
100 handle; 101 rotary shaft; n centerline of handle;
200 ratcheting end:
210 main body; 211 accommodation space; 212 accommodation cavity; 213 first end of accommodation cavity; 214 second end of accommodation cavity; 215 circumferential wall; 216 transition portion; 217 support wall; 218a support wall; W thickness of circumferential wall; H height of circumferential wall; W1 thickness of support wall; W2 thickness of support wall; r radial line of accommodation cavity; x center axis of accommodation space; α angle between radial line of accommodation cavity and centerline of handle; X1 center of curvature of circumferential wall; X2 center of curvature of side wall of accommodation cavity; T thickened portion; CW clockwise direction; CCW counterclockwise direction;
220 drive member; 221 first tooth; 222 first working portion; 223 retaining ring; 224 coupling head; 225 guide pin; 226 second resilient element; 227 steel ball; β central angle corresponding to each first tooth; C inscribed circle of drive member;
230 pawl; 231 second tooth; 232 backside; 233 first surface;
240 first resilient element;
250 support member;
2201 guide hole;
2241 guide slot; 2242 locating hole;
301 second working portion; 302 opening.

### Detailed Description of the Preferred Embodiments

Embodiments of the present invention will be described clearly and fully hereunder in conjunction with the appended drawings so that objects, aspects and advantages of the invention will become more apparent. Evidently, the embodiments set forth herein are merely some but not all possible embodiments of this invention. Any and all other embodiments devisable by skilled artisans in light of the disclosed embodiments without paying any creative effort are considered to fall within the scope of protection of this invention.

As used herein and in the appended claims, the terms "comprises", "comprising", "includes", "including", "has", "having", or any other variation thereof, are intended to cover a non-exclusive inclusion. For example, a method or product that comprises a list of features is not necessarily limited to only those features but may include other features not expressly listed or inherent to such method or product.

It is to be noted that, the ordinal terms "first", "second", etc., may be used herein to describe elements. These terms are only used to illustrate the elements clearly and distinguish one element from another, and are not intended to imply that the elements are so termed in practice. Therefore, they should not be construed as limiting the present invention in any way.

The present invention is described in detail below with reference to the accompanying drawings, which illustrate specific embodiments thereof.

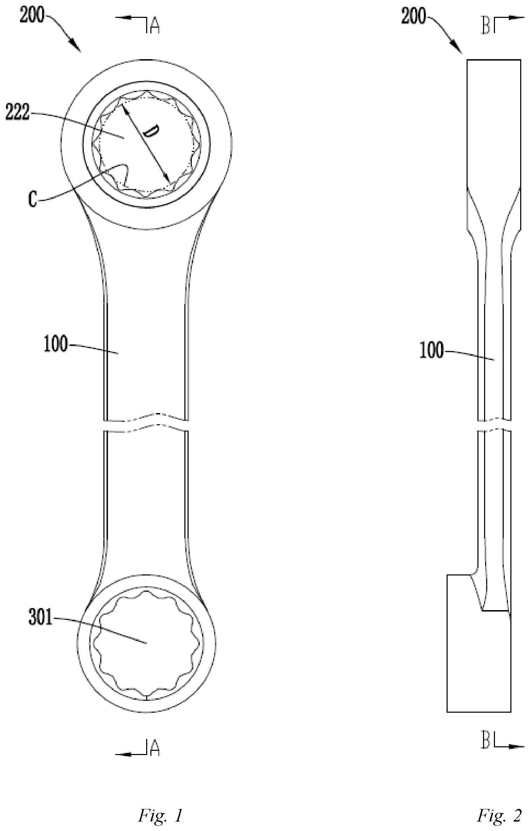

In one embodiment, as shown in Figs. 1 to 6, a ratchet wrench includes a handle 100, a main body 210, a drive member 220, a pawl 230 and a first resilient element 240.

The main body 210 is a working part of the ratchet wrench.

The main body 210 includes a circumferential wall 215 and a transition portion 216. The circumferential wall 215 defines an opening, which provides an accommodation space 211, and the handle 100 is joined to the circumferential wall 215 by the transition portion 216. The transition portion 216 defines an accommodation cavity 212 in communication with the accommodation space 211. The drive member 220 is disposed in the accommodation space 211 and configured to be rotatable about a center axis x of the accommodation space. The drive member 220 is provided with first teeth 221 on its outer circumferential surface. The pawl 230 is disposed in the accommodation cavity 212 and has opposite first 233 and second surfaces. The second surface is also referred to a backside 232 of the pawl 230 somewhere herein. The first surface 233 is provided thereon with second teeth 231 configured to be able to intermesh with the first teeth 221. The backside 232 is oriented toward a side wall of the accommodation cavity 212. The first resilient element 240 is disposed within the accommodation cavity 212 and configured to be able to apply a biasing force f1 to the pawl 230, which urges the pawl 230 toward an end of the accommodation cavity 212 to bring the second teeth 231 away from meshing engagement with the first teeth 221.

In one embodiment, as shown in Figs. 1 to 6, the ratchet wrench includes a handle 100 having an upper end portion, which is overall configured as a ratcheting end 200, and a lower end, which is overall configured as a second working portion 301. The ratcheting end 200 provides one head portion of the ratchet wrench, and the second working portion 301 provides another head portion of the ratchet wrench.

The ratcheting end 200 includes a main body 210, a drive member 220, a pawl 230, a support member 250 and a first resilient element 240. The main body 210 is a working part of the ratchet wrench.

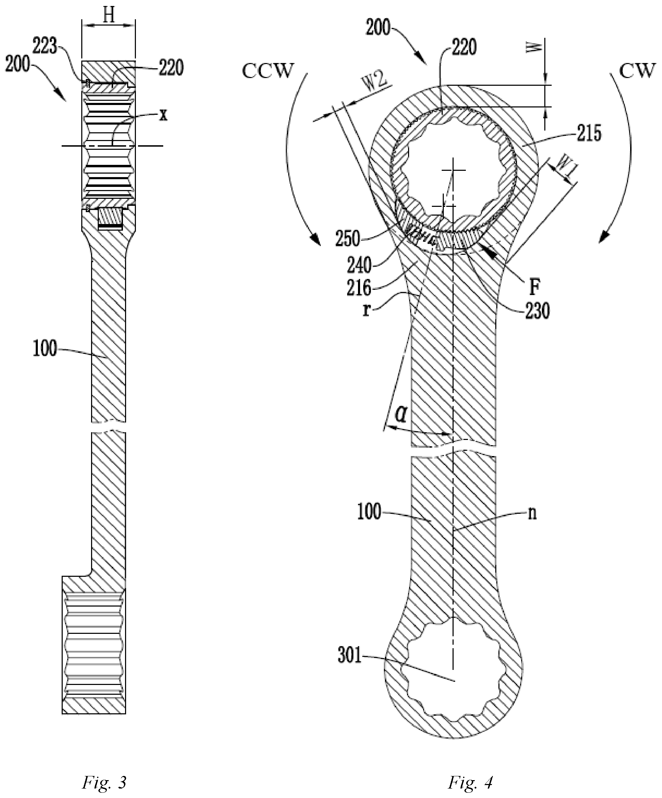

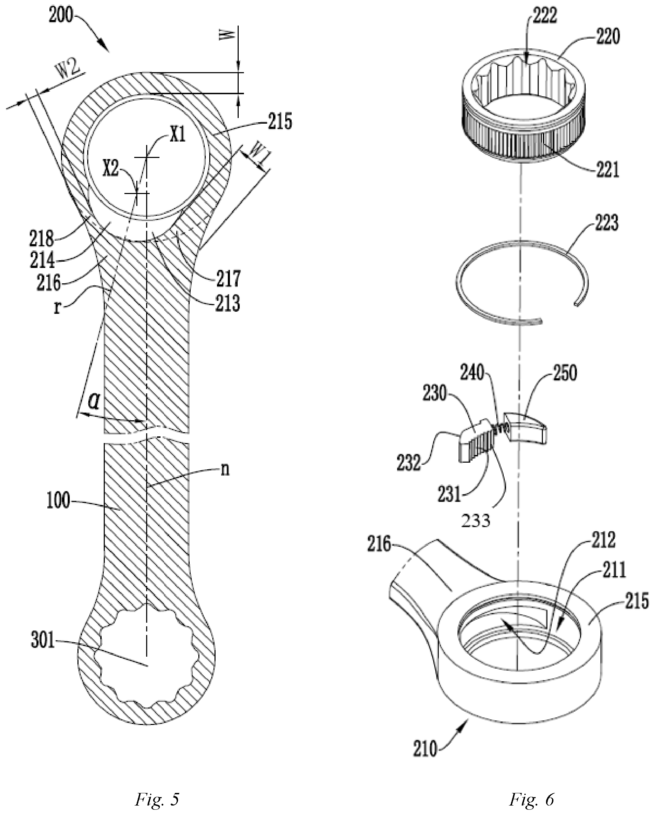

The main body 210 is joined to a handle 100 by a transition portion 216, and they are integrally formed. The handle 100 is generally narrower than the outer contours of the head portions. The transition portion 216 provides smooth transitions from the handle 100 to the respective head portions, which disperse stress there and prevent stress concentration, allowing the main body 210 to be more strongly joined to the handle 100. The main body 210 defines an accommodation space 211 in the form of a circular opening and an accommodation cavity 212. The accommodation space 211 is defined by a circumferential wall 215 having a substantially constant thickness. In Figs. 4 and 5, the outer contour of the circumferential wall 215 in the transition portion 216 is indicated by an arc-shaped dashed line. In practice, this outer contour indicated by the arc-shaped dashed line is blended into the transition portion 216 and not identifiable. The accommodation cavity 212 is hidden in the main body 210 and in communication with accommodation space 211. It extends from the accommodation space 211 into the transition portion 216. The accommodation cavity 212 is crescent-shaped, with its side wall having the center of curvature X2 located on one side of a centerline n of the handle and with its radial line r being offset from the centerline n to one side thereof. Here, the radial line r of the accommodation cavity refers to its perpendicular bisector, i.e., a line passing through both the center of curvature X2 of the side wall of the accommodation cavity and a midpoint of an arc defined by the side wall of the accommodation cavity 212 and thereby bisecting the arc, as shown in Figs. 4 and 5. As shown in Figs. 4 and 5, the radial line r of the accommodation cavity also corresponds to a straight line passing through the center of curvature X2 of the side wall of the accommodation cavity and a center of curvature X1 of the circumferential wall. Here, the centerline n of the handle 100 refers to its geometric centerline that extends in its lengthwise direction. In Figs. 4, 5 and 16, the lengthwise direction is perpendicular to the page. Thus, a first end 213 of the accommodation cavity is closer to the centerline n of the handle, while a second end 214 of the accommodation cavity is farther away from the centerline n of the handle. The side wall of the accommodation cavity at the first end 213 serves as a support wall 217, referred to hereinafter as a first support wall. The side wall of the accommodation cavity at the second end 214 also serves as a support wall 218, referred to hereinafter as a second support wall. The support wall has a thickness W1, which is not smaller than a thickness W of the circumferential wall and greater than a thickness W2 of the support wall 218. In Figs. 4 and 5, the first end 213 of the accommodation cavity is located to the right of the radial line r thereof, and the second end 214 of the accommodation cavity is located to the left of the radial line r thereof. In other embodiments, the thickness W1 throughout the support wall is not smaller than the thickness W of the circumferential wall, ensuring that the support wall 217 can provide a supporting force F to the pawl 230, which is enough to prevent damage.

The drive member 220 is in the shape of a circular ring and rotatably arranged in the accommodation space 211 by a retaining ring 223, like a shaft. The drive member 220 is provided with first teeth 221 on the outer circumferential surface, and a middle (central) portion thereof defines a socket-like first working portion 222. The first working portion 222 is a working socket. In other embodiments, the drive member 220 may be a solid shaft, and the first working portion 222 may be a coupling socket or head for mating with an adapter for turning a workpiece.

In this embodiment, the pawl 230 is a first wedge block. The pawl 230 is arranged at the first end 213 of the accommodation cavity and matches the shape and contour thereof. The pawl 230 has the second teeth 231 and the backside 232 facing away from the second teeth 231. The backside 232 is supported on the support wall 217, with the second teeth 231 of the pawl 230 being in meshing engagement with the first teeth 221 of the drive member 220.

The support member 250 is a second wedge block and is arranged at the second end 214 of the accommodation cavity. Additionally, the second wedge block, i.e., the support member 250 matches the shape and contour of the second end 214 of the accommodation cavity.

The first resilient element 240 is a helical compression spring, with its opposite ends supported respectively on the support member 250 and the pawl 230. The support from the support member 250 provides a biasing force f1 on the pawl 230, which pushes the second teeth 231 of the pawl 230 into meshing engagement with the first teeth 221 of the drive member 220 and presses the backside 232 of the pawl 230 against the support wall 217. When the main body 210 drives the drive member 220 to rotate in synchronization therewith (in the clockwise direction CW of Fig. 4) by means of the pawl 230, the support wall 217 enables the main body 210 to provide a supporting force F to the pawl 230.

In this embodiment, the thickness W1 of the support wall is at a ratio of 0.2 to 1 to the diameter D of an inscribed circle C of the drive member, as shown in Table 1.

The thickness W1 of the support wall may be determined according to a method as described below. The number of meshing teeth out of the second teeth 231 and the first teeth 221 is an integer in the range from 3 to 12, and the thickness W1 of the support wall is taken as an average of its thicknesses corresponding to the respective second teeth 221. In this method, for each second tooth 221, the thickness of the support wall is generally measured in a direction in which the second tooth 221 is stressed when it is in meshing engagement. For the sake of simplicity, the thickness W1 of the support wall may be taken as the smallest one of its thicknesses corresponding to the respective second teeth 221 when in meshing engagement.

Moreover, an angle α between the radial line of the accommodation cavity and the centerline n of the handle is at a ratio of 0.5°/mm to 2.5°/mm to the diameter D of the inscribed circle C of the drive member, as shown in Table 1.

Table 1 lists values of the ratio of the thickness W1 of the support wall to the diameter D of the inscribed circle C of the drive member and the ratio of the angle α to the diameter D of the inscribed circle C of the drive member for some possible models of the ratchet wrench.

**Table 1**

| Diameter D of Inscribed Circle C of Drive member (mm) | Support Wall Thickness W1 (mm) | W1/D Ratio | Angle of Eccentricity α (°) | α/D Ratio (°/mm) |
|---|---|---|---|---|
| 8 | 2.86 | 0.3575 | 5.8 | 0.725 |
| 9 | 2.86 | 0.317777778 | 15 | 1.666666667 |
| 10 | 5.68 | 0.568 | 12.6 | 1.26 |
| 11 | 5.68 | 0.516363636 | 15 | 1.363636364 |
| 12 | 7.93 | 0.660833333 | 15 | 1.25 |
| 13 | 8.43 | 0.648461538 | 15 | 1.153846154 |
| 14 | 9.23 | 0.659285714 | 15 | 1.071428571 |
| 15 | 9.23 | 0.615333333 | 15 | 1 |
| 16 | 10.21 | 0.638125 | 15 | 0.9375 |
| 17 | 10.3 | 0.605882353 | 15 | 0.882352941 |
| 18 | 10.3 | 0.572222222 | 15 | 0.833333333 |
| 19 | 13.6 | 0.715789474 | 15 | 0.789473684 |
| 20 | 12.82 | 0.641 | 15 | 0.75 |
| 21 | 12.82 | 0.61047619 | 15 | 0.714285714 |
| 22 | 12.82 | 0.582727273 | 15 | 0.681818182 |
| 23 | 15.17 | 0.659565217 | 15 | 0.652173913 |
| 24 | 15.17 | 0.632083333 | 15 | 0.625 |
| 25 | 15.17 | 0.6068 | 15 | 0.6 |
| 26 | 21.2 | 0.815384615 | 15 | 0.576923077 |
| 27 | 21.2 | 0.785185185 | 15 | 0.555555556 |
| 28 | 22.87 | 0.816785714 | 15 | 0.535714286 |
| 29 | 22.87 | 0.78862069 | 15 | 0.517241379 |
| 30 | 22.87 | 0.762333333 | 15 | 0.5 |
| 31 | 24.13 | 0.778387097 | 15 | 0.483870968 |
| 32 | 24.13 | 0.7540625 | 15 | 0.46875 |

In order to use the ratchet wrench, the first working portion 222 is fitted over a workpiece, and the handle 100 is turned in the clockwise direction CW of Fig. 4. As a result, the support wall 217 applies a supporting force F to the backside 232 of the pawl 230 to press the pawl 230 between the support wall 217 and the drive member 220, bringing the second teeth 231 of the pawl 230 into meshing engagement the first teeth 221 of the drive member 220. Thus, the drive member 220 is rotated in synchronization, turning the workpiece. In this process, the support member 250 rotates with the handle 100 and the drive member 220, and the support wall 217 is subject to the reaction force to the supporting force F. However, since the thickness W1 of the support wall is greater than the thickness W of the circumferential wall, the support wall 217 can provide a large enough supporting force F while not being damaged (deformed or broken). According to test results, when the angle α between the radial line of the accommodation cavity and the centerline of the handle lies between 5° and 20° and the thickness W of the circumferential wall is at a ratio of 0.5 to 0.85 to a height H of the circumferential wall, a statisfactory fit of the drive member with a workpiece or adapter can be ensured, and sufficient strength of the main body 210 and components thereof involved in force transmission as well. On the contrary, with the first working portion 222 being fitted over a workpiece, when the handle 100 is rotated in the counterclockwise direction CCW of the Fig. 4, the support wall 217 will tend to move away from the backside 232 of the pawl 230 without applying a supporting force F to the pawl 230. As the handle 100 is rotated, the support member 250 rotates therewith, and the pawl 230 is pushed by the biasing force f1 of the first resilient element 240 toward a position between the support wall 217 and the drive member 220. At the same time, the second teeth 231 of the pawl 230 slide over the first teeth 221 of the drive member 220 one by one. Consequently, the handle 100 rotates idly, with the drive member 220 and the workpiece remaining stationary.

Therefore, the handle 100 can be rotated in the clockwise direction CW to turn a workpiece, and in the counterclockwise direction CCW to return to its starting position. In this way, the handle 100 can be rotated alternately in the clockwise CW and counterclockwise CCW directions to turn the workpiece in repeated cycles. As viewed in the orientation of Fig. 4, after the ratchet wrench is turned upside down, namely, mirrored in the direction perpendicularly to the page of Fig. 4, the handle 100 can be rotated in the counterclockwise direction CCW to turn a workpiece, and in the clockwise direction CW to return to the starting position.

In this embodiment, machining of the accommodation space 211 in the shape of a circular opening and the crescent-shaped accommodation cavity 212 of the main body 210 is critical to the manufacturing of ratchet wrench. After the main body 210 is formed, the other components including the drive member 220 and the pawl 230 may be assembled to the main body 210.

In this embodiment, the handle 100 may be formed integrally with the main body 210 according to the following sequence of steps: blank feeding -> forging -> polishing (or vibration) -> punching (or broaching) for forming the accommodation space 211 -> fine machining of the accommodation space 211 -> embossing of the shank (main body of the handle 100) -> heat treatment -> polishing (or vibration) -> surface finishing (electroplating, blackening, electrophoresis, painting and baking, or the like) -> assembly. In the fine machining step, the accommodation cavity 212 may be finely machined along with, and integrally formed with, the accommodation space 211 in the shape of a circular opening on a single CNC turn-mill lathe having a spindle, which is controlled by a program to enable precise formation of the angle α. Relatively, this method involves fewer steps and provides high accuracy and efficiency.

Table 2 presents torque test results of samples with the diameter D of the inscribed circle C of the drive member being 10 mm, 13 mm and 16 mm and the angle of eccentricity of the crescent-shaped accommodation cavity 212 being 0°, 5°, 10° and 15°.

**Table 2**

| Sample | Diameter D of Inscribed Circle C of Drive member = 10 mm | | Diameter D of Inscribed Circle C of Drive member = 13 mm | | Diameter D of Inscribed Circle C of Drive member = 16 mm | |
|---|---|---|---|---|---|---|
| | Breaking Torque (N-m) | After Test | Breaking Torque (N-m) | After Test | Breaking Torque (N·m) | After Test |
| 0° 1# | 118.8 | restrictions and blockages | 259.4 | damaged circular opening | 405.9 | bent shank |
| 0° 2# | 125.9 | restrictions and blockages | 226.7 | bent shank | 382.7 | bent shank |
| 0° 3# | 103.5 | unsmoothness | 214.5 | broken teeth | 399.9 | bent shank |
| 0° 4# | 104.2 | unsmoothness | 222.6 | restrictions and blockages | 391.4 | bent shank |
| 0° 5# | 115.3 | unsmoothness | 199.0 | unsmoothness | 359.1 | restrictions and blockages |
| 0° 6# | 117.0 | unsmoothness | 243.3 | bent shank | 398.0 | bent shank |
| 5° 1# | 122.3 | unsmoothness | 253.1 | bent shank | 399.2 | bent shank |
| 5° 2# | 105.8 | restrictions and blockages | 246.3 | bent shank | 384.2 | bent shank |
| 5° 3# | 121.8 | restrictions and blockages | 253.6 | bent shank | 347.3 | bent shank |
| 5° 4# | 145.6 | bent shank | 212.1 | restrictions and blockages | 396.3 | bent shank |
| 5° 5# | 119.8 | restrictions and blockages | 192.7 | unsmoothness | 398.1 | bent shank, restrictions and blockages |
| 5° 6# | 129.1 | restrictions and blockages | 236.0 | bent shank | 409.4 | bent shank |
| 10° 1# | 139.1 | bent shank | 237.3 | bent shank | 366.0 | bent shank |
| 10° 2# | 125.1 | restrictions and blockages | 235.0 | bent shank | 382.5 | bent shank |
| 10° 3# | 141.9 | bent shank | 229.8 | bent shank | 400.3 | bent shank |
| 10° 4# | 107.4 | restrictions and blockages | 197.9 | restrictions and blockages | 400.8 | bent shank |
| 10° 5# | 133.7 | restrictions and blockages | 222.1 | unsmoothness | 374.2 | bent shank |
| 10° 6# | 145.5 | bent shank | 235.0 | bent shank | 395.4 | bent shank |
| 15° 1# | 121.8 | restrictions and blockages | 254.7 | bent shank | 390.3 | bent shank |
| **15°** 2# | 133.6 | unsmoothness | 243.3 | bent shank | 381.4 | bent shank |
| 15° 3# | 142.1 | bent shank | 221.3 | bent shank | 415.9 | bent shank |
| **15°** 4# | 148.6 | bent shank | 249.2 | bent shank, restrictions and blockages | 401.2 | bent shank |
| **15°** 5# | 135.7 | restrictions and blockages | 278.7 | bent shank, restrictions and blockages | 412.2 | bent shank |
| 15° 6# | 130.7 | restrictions and blockages | 257.2 | bent shank, restrictions and blockages | 360.6 | restrictions and blockages |

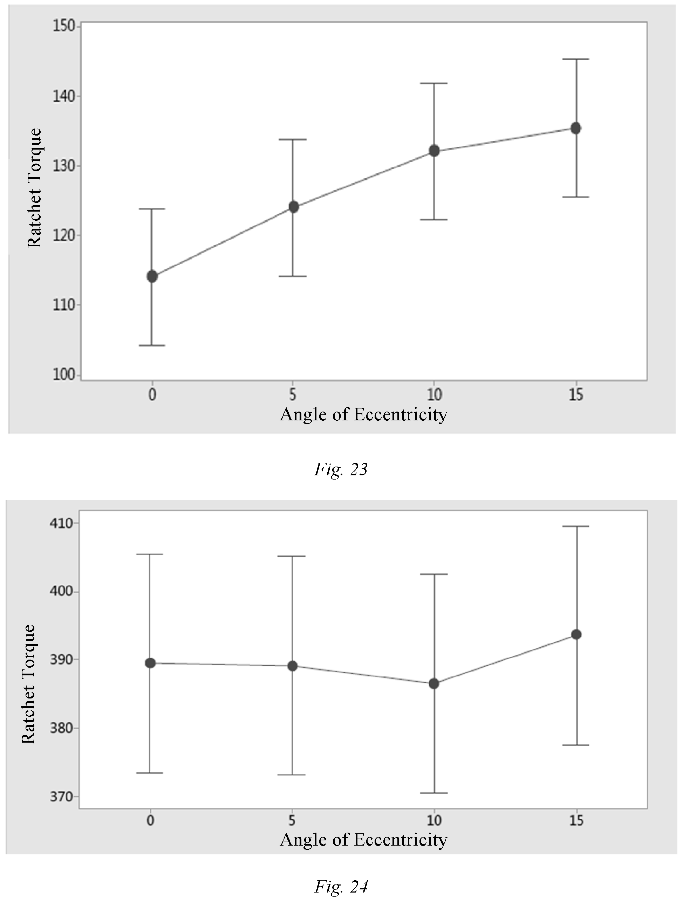

As shown in Fig. 23, the samples with the diameter D of the inscribed circle C of the drive member being 10 mm and the angle α between the radial line of the accommodation cavity and the centerline of the handle (angles of eccentricity) being different values showed much different breaking torques, as well as a clear trend of the torque increasing as the angle of eccentricity increases. Fig. 23 shows a range over which the pooled standard deviations are calculated within 95% confidence intervals of the means, in which the angles of eccentricity are measured in degrees (°) and torques in N·m.

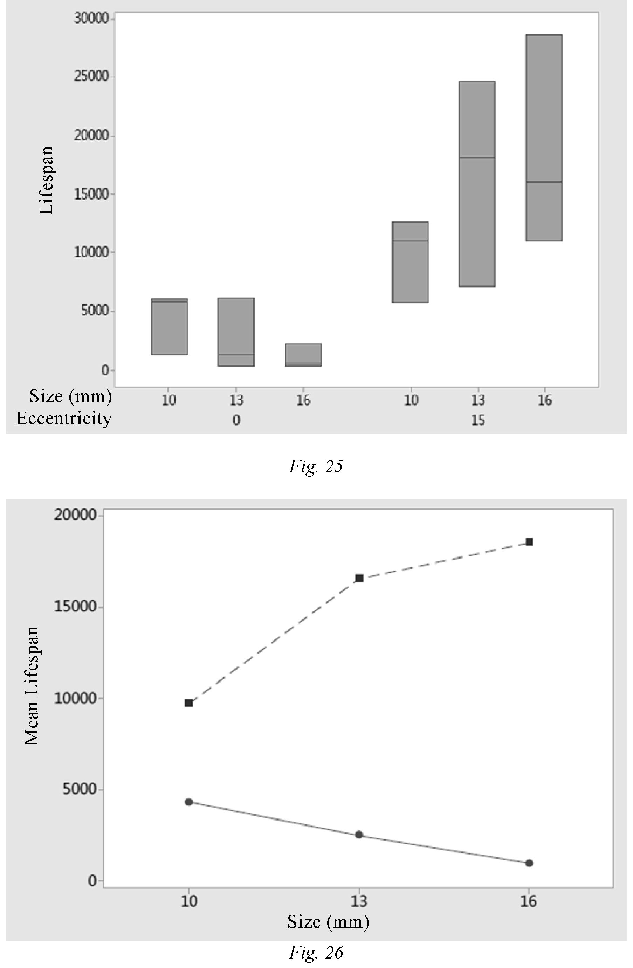

The eccentricity-dependent torque tests on the samples with the diameter D of the inscribed circle C of the drive member being 16 mm failed because the handle 100 yielded and was bent and damaged due to limited strength, as shown in Fig. 24 which shows a range over which the pooled standard deviations are calculated within 95% confidence intervals of the means. In Fig. 24, the angles of eccentricity are measured in degrees (°) and torques in N·m. Figs. 25 to 26 show the results of full-life tests according to the ASME (American Society of Mechanical Engineers) standard. As shown, the samples with the angle α (eccentricity) between the radial line of the accommodation cavity and the centerline being 15° showed a significantly extended service life than those with the eccentricity being 0°. In Fig. 26, the dashed curve represents the samples with the eccentricity being 15°, and the solid curve represents the samples with eccentricity being 0°. In Figs. 24 to 25, the eccentricity is measured in ° and the lifespans in the number of cycles.

When the angle α (eccentricity) being equal to 0° corresponds to a configuration in which the accommodation cavity 212 is symmetrical with respect to the centerline n of the handle. In this application, the angle α is greater than 0°.

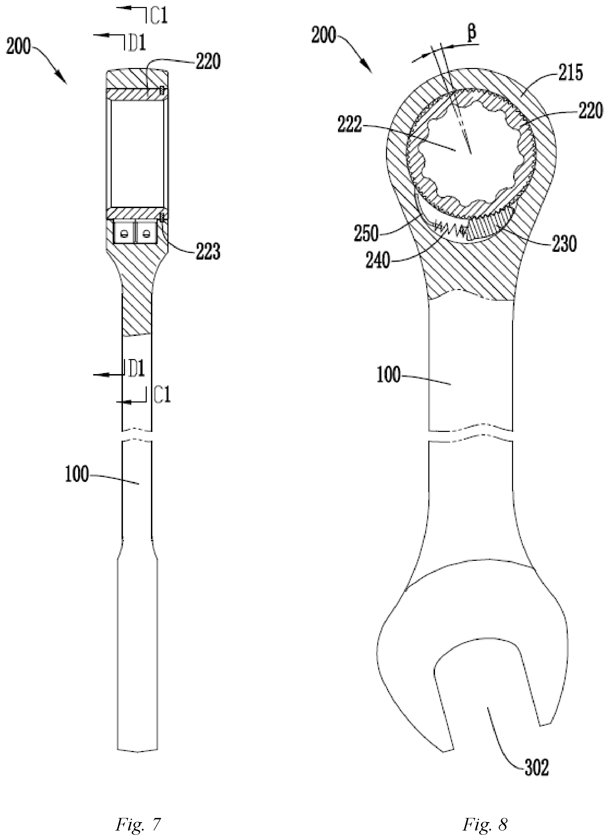

As shown in Figs. 7 to 9, a ratchet wrench according to an embodiment differs from the embodiment of Figs. 1 to 6 as follows.

Rods are fixed, serving as support members 250, to the second end 214 of the accommodation cavity. The fixation to the accommodation cavity 212 may be accomplished by welding, plugging or the like. Helical compression springs serving as first resilient elements 240 are disposed at one end over the respective rod.

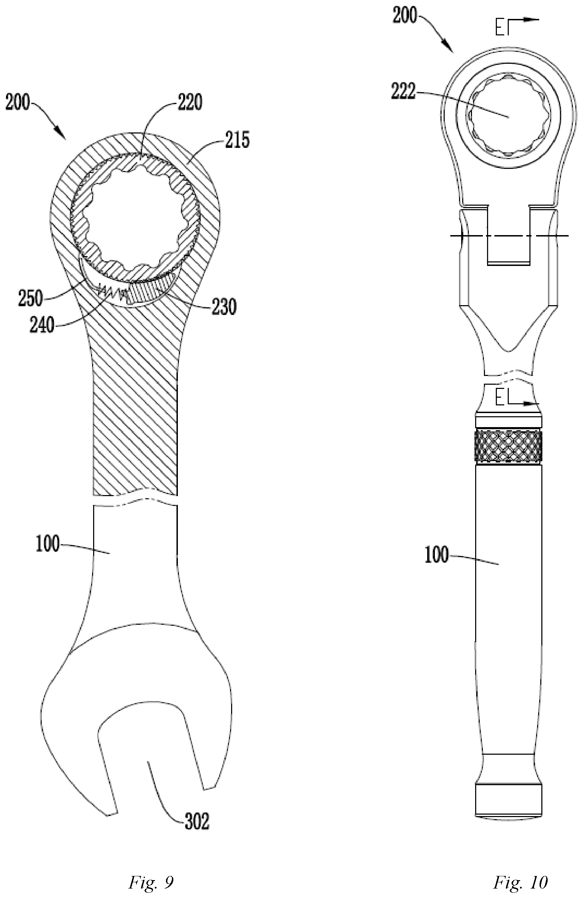

In addition, two pawls 230 are provided, each separately equipped with a respective one of the support members 250 and first resilient elements 240. The two pawls 230 are juxtaposed in an axial direction of the accommodation space 211. When second teeth 231 of one of the pawls 230 are in meshing engagement with the first teeth 221 of the drive member 220, as shown in Fig. 8, second teeth 231 of the other pawl 230 are maintained in meshing engagement with the first teeth 221 of the drive member 220 at an opposite angle of β/2, as shown in Fig. 9, where β denotes a central angle corresponding to each single first tooth 221. In this embodiment, the central angle corresponding to each single first tooth 221 is equal to 5°. Accordingly, in the process of turning a workpiece, the second teeth 231 of the other pawl 230 can be brought into meshing engagement with the first teeth 221 of the drive member 220 simply by rotating the handle 100 by 2.5° in the opposite direction. In this way, when there are, for example, 72 first teeth 221 on the drive member 220, they can provide the same effect as 144 first teeth 221 at the same size.

Further, in this embodiment, the lower end of the handle 100 is configured with an opening 302 for turning a workpiece.

The other structural details of this ratchet wrench are common to that of the embodiment shown in Figs. 1 to 6, and are therefore not repeated here.

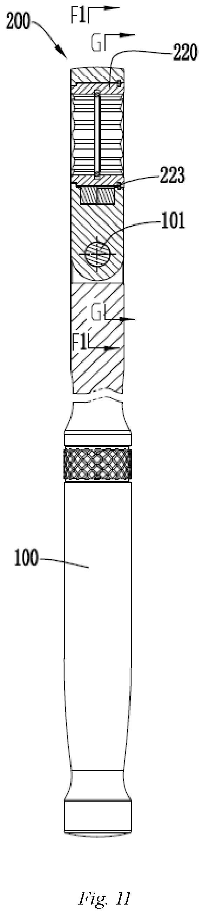

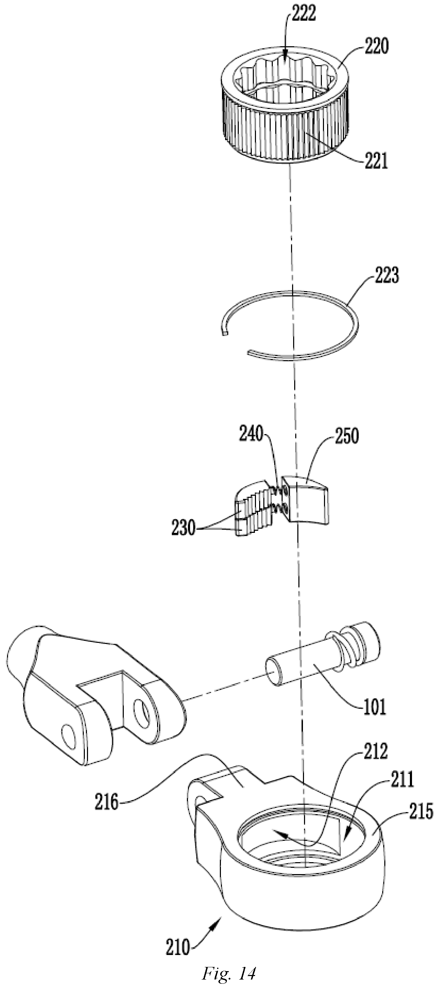

As shown in Figs. 10 to 14, a ratchet wrench according to an embodiment differs from the embodiment of Figs. 1 to 6 as follows.

The transition portion 216 is coupled to the handle 100 by a rotary shaft 101. Accordingly, the ratcheting end 200 can be pivoted about the rotary shaft 101 to allow the handle 100 to have different configurations.

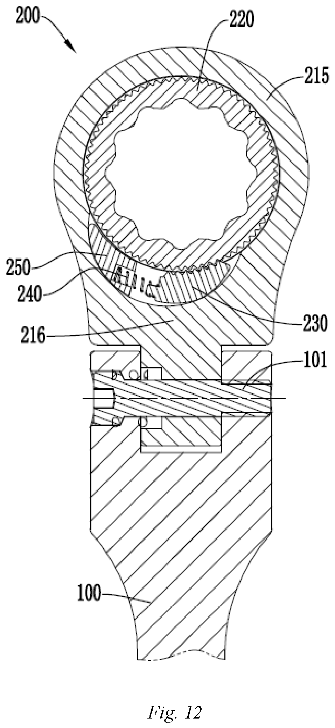

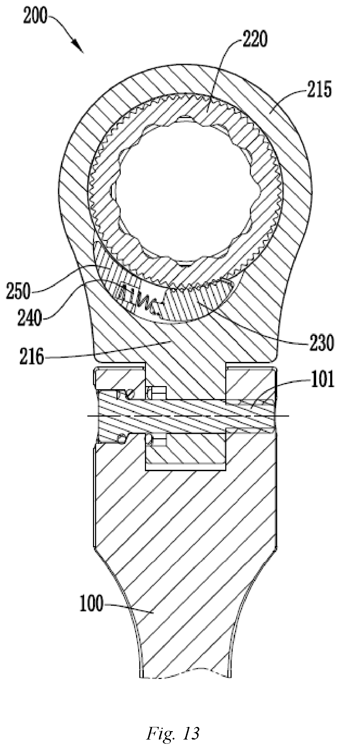

In this embodiment, there are two pawls 230 provided with a common support member 250 and respective first resilient elements 240. The two pawls 230 are juxtaposed in the axial direction of the accommodation space 211. When second teeth 231 of one of the pawls 230 are in meshing engagement with the first teeth 221 of the drive member 220, as shown in Fig. 12, second teeth 231 of the other pawl 230 are maintained in meshing engagement with the first teeth 221 of the drive member 220 at an opposite angle of β/2, as shown in Fig. 13, where β denotes a central angle corresponding to each single first tooth 221. In this embodiment, the central angle β corresponding to each single first tooth is equal to 5°. Accordingly, in the process of turning a workpiece, the second teeth 231 of the other pawl 230 can be brought into meshing engagement with the first teeth 221 of the drive member 220 simply by rotating the handle 100 by 2.5° in the opposite direction. In this way, when there are, for example, 72 first teeth 221 on the drive member 220, they can provide the same effect as 144 first teeth 221. Meanwhile, the first teeth 221 are allowed to have a relatively large contour and therefore be able to transmit a relatively large torque.

For each pawl 230, the respective first resilient element 240 is provided to apply to a biasing force f1 to it. Moreover, the two first resilient elements 240 are both supported on the support member 250, which is in the form of a second wedge block.

The other structural details of this ratchet wrench are common to that of the embodiment shown in Figs. 1 to 6, and are therefore not repeated here.

In the embodiments of Figs. 7 to 9 and of Figs. 10 to 14, three pawls 230 may be alternatively provided, which are juxtaposed in the axial direction of the accommodation space 211. When second teeth 231 of any of the pawls 230 are in meshing engagement with the first teeth 221 of the drive member 220, second teeth 231 of each other pawl 230 are maintained in meshing engagement with the first teeth 221 of the drive member 220 at an opposite angle of β/3, where β denotes a central angle corresponding to each single first tooth 221. For example, 60 first teeth 221 may be evenly spaced across the drive member 230. Thus, each first tooth corresponds to a central angle β of 6°. In the process of turning a workpiece, the second teeth 231 of another pawl 230 can be brought into meshing engagement with the first teeth 221 of the drive member 220 simply by rotating the handle 100 by 2° in the opposite direction. In this way, the 60 first teeth 221 on the drive member 220 can provide the same effect as 180 first teeth 221. Meanwhile, the first teeth 221 are allowed to have a relatively large contour and therefore be able to transmit a relatively large torque.

Further, in this embodiment, the lower end of the handle does not define any opening or socket for turning a workpiece.

The other structural details of this ratchet wrench are common to that of the embodiment shown in Figs. 1 to 6, and are therefore not repeated here.

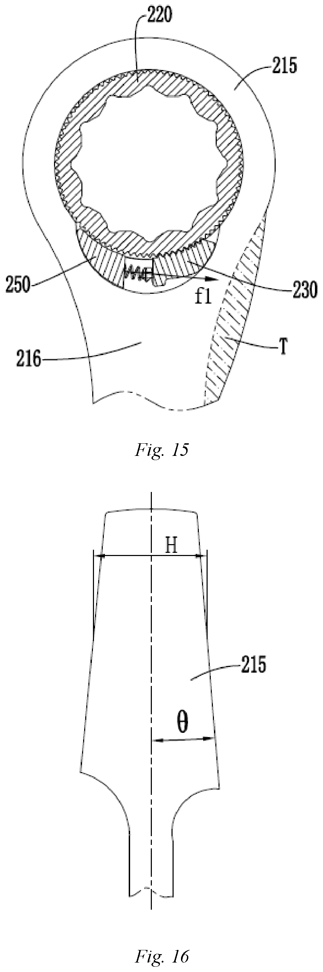

As shown in Fig. 15, a ratchet wrench according to an embodiment differs from the embodiment of Figs. 1 to 6 in that the transition portion 216 has a thickness along its contour on the side of the support wall 217, which is greater than a thickness thereof along the contour on the other side. That is, the contour of the transition portion 216 is asymmetrical. In Fig. 15, the dashed line on the right hand represents an imaginary line symmetrical to the left edge of the transition portion, and the hatched area on the right hand indicates the thickened portion T. With this arrangement, the support wall 217 is strengthened to enable the ratchet wrench to provide a larger maximum possible torque.

The other structural details of this ratchet wrench are common to that of the embodiment shown in Figs. 1 to 6, and are therefore not repeated here.

As shown in Fig. 16, a ratchet wrench according to an embodiment differs from the embodiment of Figs. 1 to 6 in that a height H of the circumferential wall 215 gradually increases from a location distal from the transition portion 216 to a location proximal to the transition portion 216. In this way, the end face of the circumferential wall 215 defines an angle θ with the centerline n of the handle, which strengthens the support wall 217 and thereby enables the ratchet wrench to provide a larger maximum possible torque. The other structural details of this ratchet wrench are common to that of the embodiment shown in Figs. 1 to 6, and are therefore not repeated here.

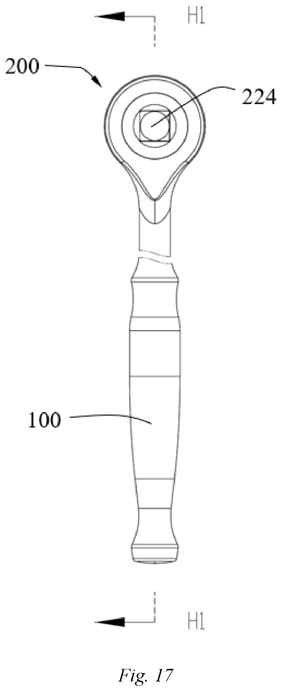

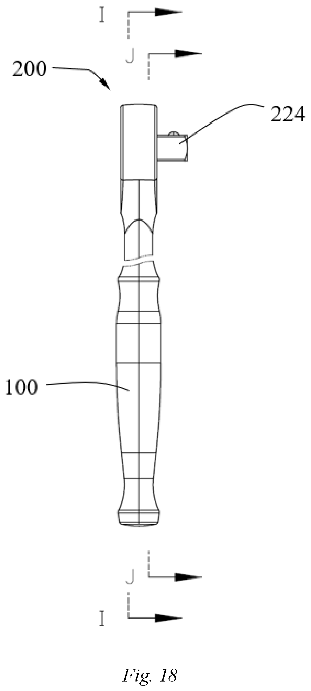

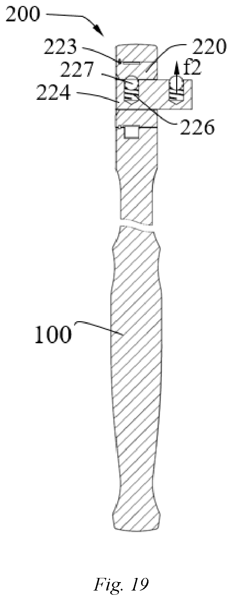

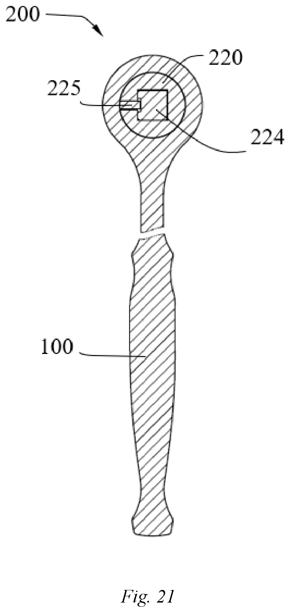

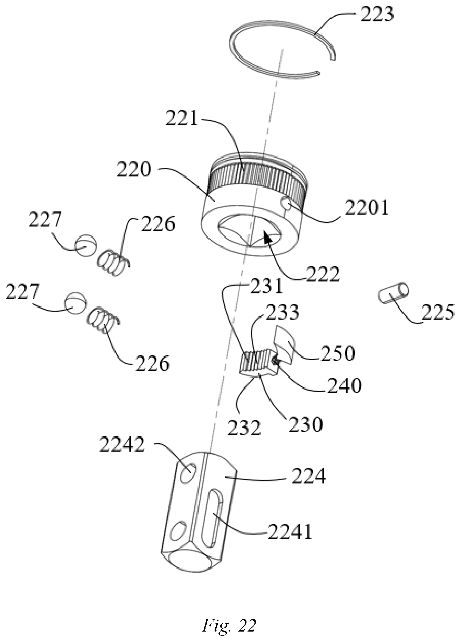

As shown in Figs. 17 to 22, a ratchet wrench according to an embodiment differs from the embodiment of Figs. 1 to 6 as follows:
The drive member 220 is cylindrical, and is rotatably arranged in the accommodation space 211 by a retaining ring 223, like a shaft. The drive member 220 is provided with first teeth 221 on its outer circumferential surface, and its middle portion defines a first working portion 222 in the form of a square coupling socket. The first working portion 222 serves as a working socket. The ratchet wrench may further include a coupling head 224, which can be slidably coupled in the first working portion 222. The coupling head 224 can be switched between a first position, where its one end is exposed from the first working portion 222 on one side thereof (see Fig. 18), and a second position where its other end is exposed from the first working portion 222 on the opposite side thereof. An adapter can be coupled to the exposed end of the coupling head 224 to turn a workpiece. In this embodiment, the coupling head 224 is a square post matching the first working portion 222 in cross-sectional size. The coupling head 224 defines a guide slot 2241 in its one side wall, and the circumferential wall of the drive member 220 defines a guide hole 2201 in positional correspondence with the guide slot 2241. A guide pin 225 is disposed in the guide hole 2201, with its one end extending in the guide slot 2241 to guide and restrict the coupling head 224. The coupling head 224 defines two locating holes 2242 in another side wall, in each of which a second resilient element 226 and a steel ball 227 are received. The second resilient element 226 is in the form of a helical compression spring. The drive member 220 defines locating recess in an inner wall of the square coupling socket. When the coupling head 224 is at the first position, the upper second resilient element 226 and the upper steel ball 227, as viewed in the orientation of Fig. 22, are located in the square coupling socket, and the steel ball 227 is urged by a biasing force f2 from the second resilient element 226 toward the inner wall of the square coupling socket of the drive member 220 and into the locating recess, locating the coupling head 224 at the first position. When the coupling head 224 is at the second position, the lower second resilient element 226 and the lower steel ball 227, as viewed in the orientation of Fig. 22, are located in the square coupling socket, and the steel ball 227 is urged by a biasing force f2 from the second resilient element 226 toward the inner wall of the square coupling socket of the drive member 220 and into the locating recess, locating the coupling head 224 at the second position.

In this embodiment, the pawl 230 is provided in the form of a first wedge block at the first end 213 of the accommodation cavity. The pawl 230 matches the shape and contour of the first end 213 of the accommodation cavity. The pawl 230 defines second teeth 231 and has a backside 232 facing away from the second teeth 231. The backside 232 is supported on the support wall 217, with the second teeth 231 of the pawl 230 being in meshing engagement with the first teeth 221 of the drive member 220.

The support member 250 is provided in the form of a second wedge block at the second end 214 of the accommodation cavity. Additionally, the second wedge block that serves as the support member 250 matches the shape and contour of the second end 214 of the accommodation cavity.

The first resilient element 240 is provided in the form of a helical compression spring between the support member 250 and the pawl 230, with its opposite ends being supported respectively on the support member 250 and the pawl 230. The support from the support member 250 provides a biasing force f2 on the pawl 230, which pushes the second teeth 231 of the pawl 230 into meshing engagement with the first teeth 221 of the drive member 220 and presses the backside 232 of the pawl 230 against the support wall 217. When the main body 210 drives the drive member 220 to rotate in synchronization therewith by means of the pawl 230, the support wall 217 enables the main body 210 to provide a supporting force F to the pawl 230.

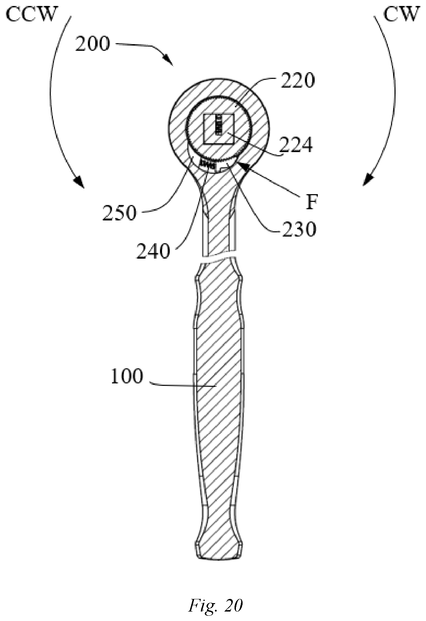

In use of the ratchet wrench, when the coupling head 224 is located at the first position, an adapter may be coupled to the coupling head 224 and fitted over a workpiece. If the handle 100 is rotated in the clockwise direction CW of Fig. 20, the support wall 217 will apply a supporting force F to the backside 232 of the pawl 230, pressing the pawl 230 between the support wall 217 and the drive member 220 and bringing the second teeth 231 of the pawl 230 into meshing engagement with the first teeth 221 of the drive member 220. Thus, the drive member 220 can synchronously rotate to turn the workpiece. Otherwise, after the adapter is coupled to the coupling head 224 and fitted over the workpiece, if the handle 100 is rotated in the counterclockwise direction CCW of Fig. 20, the support wall 217 tends to move away from the backside 232 of the pawl 230, without applying a supporting force F to the pawl 230. Accordingly, as the handle 100 is rotated, the support member 250 rotates therewith, and the pawl 230 is pushed by a biasing force f1 of the first resilient element 240 toward a position between the support wall 217 and the drive member 220. At the same time, the second teeth 231 of the pawl 230 slide over the first teeth 221 of the drive member 220 one by one. Consequently, the handle 100 rotates idly, with the drive member 220 and the workpiece remaining stationary.

Therefore, the handle 100 can be rotated in the clockwise direction CW to turn the workpiece, and in the counterclockwise direction CCW to return to its starting position. In this way, the handle 100 can be rotated alternately in the clockwise CW and counterclockwise CCW directions to turn the workpiece in repeated cycles. Further, when the coupling head 224 is at the second position, the handle 100 can be rotated in the counterclockwise direction CCW to turn the workpiece, and in the clockwise direction CW to return to its starting position.

The other structural details of this ratchet wrench are common to that of the embodiment shown in Figs. 1 to 6, and are therefore not repeated here.

It is apparent that the foregoing embodiments of the present invention are merely examples for clearly illustrating the invention, but are not intended to limit the invention to these embodiments. For those of ordinary skill in the art, many variations or modifications to the above embodiments are possible. Enumerating all possible embodiments herein is neither necessary nor possible. Any and all changes, equivalent alternatives and modifications made within the spirit and scope of the present invention are all intended to be embraced within the scope defined by the appended claims.

## Claims

1. A ratchet wrench, comprising:
a handle;
a working part, the working part comprising a circumferential wall and a transition portion, the circumferential wall defining an accommodation space therein in the shape of an opening, the transition portion coupling the handle to the circumferential wall, the transition portion defining an accommodation cavity therein, the accommodation cavity in communication with the accommodation space;
a drive member, the drive member disposed within the accommodation space and configured to be rotatable about a center axis of the accommodation space, the drive member defining first teeth on its outer circumferential surface;
a pawl, the pawl disposed within the accommodation cavity, the pawl having a first surface and a second surface, which oppose each other, the first surface provided thereon with second teeth, the second teeth configured to be able to be brought into meshing engagement with the first teeth, the second surface oriented to face a side wall of the accommodation cavity; and
a first resilient element, the first resilient element disposed within the accommodation cavity and configured to be able to apply a biasing force to the pawl to push the pawl toward an end of the accommodation cavity to disengage the second teeth from meshing engagement with the first teeth.

2. The ratchet wrench of claim 1, wherein the accommodation cavity comprises a first end and a second end, the first end of the accommodation cavity proximal to a centerline of the handle, the second end of the accommodation cavity distal from the centerline of the handle, a side wall of the accommodation cavity at the first end serves as a first support wall, and a side wall of the accommodation cavity at the second end serves as a second support wall.

3. The ratchet wrench of claim 2, wherein a thickness of the first support wall is not smaller than a thickness of the circumferential wall.

4. The ratchet wrench of claim 2, wherein an angle between a radial line of the accommodation cavity and the centerline of the handle lies between 5° and 20°.

5. The ratchet wrench of claim 2, wherein the drive member defines a working socket therein.

6. The ratchet wrench of claim 5, wherein a ratio of a thickness of the first support wall to a diameter of an inscribed circle of the drive member lies between 0.2 and 1.

7. The ratchet wrench of claim 5, wherein a ratio of an angle between a radial line of the accommodation cavity and the centerline of the handle to a diameter of an inscribed circle of the drive member lies between 0.5°/mm and 2.5°/mm.

8. The ratchet wrench of claim 2, wherein a center of curvature of the side wall of the accommodation cavity is located on one side of the centerline of the handle.

9. The ratchet wrench of claim 2, wherein a thickness of the second support wall is smaller than a thickness of the first support wall.

10. The ratchet wrench of claim 2, further comprising a support member, the support member disposed at the second end of the accommodation cavity, wherein the first resilient element is disposed between the support member and the pawl.

11. The ratchet wrench of claim 2, wherein the pawl is a first wedge block, the first wedge block matching the first end of the accommodation cavity in shape and contour.

12. The ratchet wrench of claim 10, wherein the support member is a second wedge block, the second wedge block matching the second end of the accommodation cavity in shape and contour.

13. The ratchet wrench of claim 10, wherein the support member is a rod fixed at the second end of the accommodation cavity.

14. The ratchet wrench of claim 1, wherein there are m pawls, where m is 2 or 3, the m pawls juxtaposed in an axial direction of the accommodation space, and when the second teeth of any one of the pawls are in meshing engagement with the first teeth, the second teeth of another one of the pawls are maintained in meshing engagement with the first teeth at an opposite angle of β/m, where β denotes a central angle corresponding to each single first tooth.

15. The ratchet wrench of claim 1, wherein the transition portion is pivotally coupled to the handle by a rotary shaft.

16. The ratchet wrench of claim 1, wherein a ratio of a thickness of the circumferential wall to a height of the circumferential wall lies between 0.5 and 0.85.

17. The ratchet wrench of claim 2, wherein a thickness of the transition portion along its contour on the side of the first support wall is greater than its thickness along the contour on the other side.

18. The ratchet wrench of claim 1, wherein a height of the circumferential wall gradually increases from a location distal from the transition portion to a location proximal to the transition portion.

19. The ratchet wrench of claim 5, wherein the working socket of the drive member is square.

20. The ratchet wrench of claim 19, further comprising a coupling head, the coupling head slidably coupled in the working socket of the drive member, the coupling head configured to be switchable between a first position, where its one end is exposed from the working socket on one side thereof, and a second position, where its other end is exposed from the working socket on the opposite side thereof.
